(19) Europäisches Patentamt
European Patent Office
Office européen des brevets

(11) **EP 4 134 699 A1**

(12) **EUROPÄISCHE PATENTANMELDUNG**

(43) Veröffentlichungstag:
**15.02.2023  Patentblatt 2023/07**

(21) Anmeldenummer: **22181046.8**

(22) Anmeldetag: **24.06.2022**

(51) Internationale Patentklassifikation (IPC):
**G01S 5/18** (1968.09)   **G01S 15/04** (1980.01)
**G01S 15/46** (1980.01)   **G06F 3/043** (2006.01)

(52) Gemeinsame Patentklassifikation (CPC):
**G01S 5/18; G01S 7/52004; G01S 15/04;
G01S 15/876; G06F 3/0436**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **09.08.2021  DE 102021120598**

(71) Anmelder: **SICK AG
79183 Waldkirch (DE)**

(72) Erfinder: **Baldischweiler, Boris
79194 Gundelfingen (DE)**

(54) **VORRICHTUNG UND VERFAHREN ZUR ERFASSUNG VON OBJEKTEN IN EINEM ÜBERWACHUNGSBEREICH**

(57)    Es wird eine Vorrichtung zum Erfassen von Objekten in einem Überwachungsbereich angegeben, der mindestens eine aus wenigstens einem Festkörpermaterial gebildete Fläche aufweist. Eine Schallquelle koppelt Schallwellen in die Fläche des Überwachungsbereichs ein. Ein Schallaufnehmer erfasst in der Fläche erzeugte Schallwellen und zum generiert Messsignale aus den erfassten Schallwellen. Eine Steuer- und Auswerteeinrichtung steuert die Schallquelle an und empfängt die Messsignale des Schallaufnehmers, wobei die Steuer- und Auswerteeinrichtung anhand der Messsignale eine Anwesenheit eines Objekts auf der Fläche des Überwachungsbereichs erfassen kann.

Fig. 1

**Beschreibung**

Die vorliegende Erfindung betrifft eine Vorrichtung und ein Verfahren zur Erfassung von Objekten in einem Überwachungsbereich nach dem Oberbegriff des Anspruchs 1 beziehungsweise 15.

Aus dem Stand der Technik sind verschiedenste Vorrichtungen und Verfahren zur Personen- und Objektdetektion bekannt, beispielsweise Kameras, Laserscanner, Radar, oder Ultraschallsensoren. Jede der genannten Vorrichtungen hat Vor- und Nachteile und ist für bestimmte Applikationen besser geeignet als andere. Den genannten Vorrichtungen gemein ist, dass die Signalausbreitung sowohl der Sendeals auch der Empfangssignale durch die Luft erfolgt. Nachteilig sind dabei vor allem Sichtbehinderungen wie beispielsweise Nebel, Störquellen wie die Sonne oder andere Strahlungsquellen, sowie Begrenzungen (ein Objekt kann ein anderes Objekt verdecken). Weitere Vorrichtungen zur Detektion Objekten sind Drucksensoren, beispielsweise Trittmatten, wie sie in der US 2007 069 021 A1 offenbart werden. Bei einer Überwachung einer Fläche mit Drucksensoren muss jedoch jeder Drucksensor mit einer Steuer- und Auswerteinheit verbunden sein, was die Installation eines solchen Systems aufwändig macht. Weiterhin ist es bekannt, durch Schritte ausgelöste Schwingungen im Boden durch Sensoren zu erfassen und aus den Schwingungssignale die Position von Personen zu ermitteln. Derartige Systeme und Verfahren sind beispielsweise aus der US 10 154 802 B2 oder US 10 810 481 B2 bekannt. Nachteilig bei den letztgenannten Systemen ist, dass sie Objekte nur dann erfassen können, wenn diese selbst Schwingungen im Boden erzeugen, beispielsweise gehende Personen. Statische Objekte, die keine Schwingungen auslösen, können nicht detektiert werden.

Es ist daher die Aufgabe der Erfindung, eine verbesserte Vorrichtung und ein verbessertes Verfahren zur Erfassung von Objekten in einem Überwachungsbereich anzugeben, mit dem die vorgenannten Nachteile vermieden werden können

Diese Aufgabe wird durch eine Vorrichtung und ein Verfahren zur Erfassung von Objekten in einem Überwachungsbereich nach Anspruch 1 beziehungsweise 10 gelöst

Bei der Schallausbreitung in einem Festkörper treten im Unterschied zur Schallausbreitung in Gasen oder Flüssigkeiten neben longitudinalen Wellen auch transversale Wellen und Oberflächenwellen, insbesondere sogenannte Rayleigh-Wellen, auf. Im Festkörper ist die Ausbreitungsgeschwindigkeit dabei abhängig vom Wellentyp. Eine longitudinale Welle breitet sich in der Regel schneller aus als eine transversale Welle. Oberflächenwellen können sich kreisförmig an der Oberfläche eines Objektes ausbreiten, ohne in die Tiefe einzudringen. Dadurch nimmt die Energie der Wellen nur mit $1/r$ ab, wobei $r$ der Abstand zur Schallquelle ist, und nicht wie bei den longitudinalen und transversalen Wellen mit $1/r^2$ ab. Welche Wellen wie stark angeregt werden ist unter anderem abhängig vom Einkoppelwinkel der Schallquelle, also dem Winkel zwischen der Fläche, in die die Schallwelle eingekoppelt wird und der Abstrahlrichtung der Schallquelle. Zur bevorzugten Anregung von Oberflächenwellen ist eine Einkopplung der Schallwellen in die Fläche unter einem Winkel von 60 Grad oder weniger vorteilhaft. Bei Einkoppelwinkeln kleiner 60 Grad wird insbesondere die Erzeugung von longitudinalen Wellen vermieden. Besonders bevorzugt kann ein Einkoppelwinkel von 30 Grad oder weniger verwendet werden, da dann neben der Erzeugung von longitudinalen Wellen auch die Erzeugung von transversalen Wellen vermieden wird. Grundsätzlich ist aber auch ein senkrechtes Einkoppeln möglich, wobei dann auch andere Wellentypen stärker angeregt werden. Rayleigh-Wellen können beispielsweise durch spezielle kammartige Schallköpfe erzeugt werden, deren Auslegung material- und wellenlängenabhängig ist.

In eine aus wenigstens einem Festkörper bestehende Fläche eingekoppelte Schallwellen breiten sich in der Fläche aus und werden an Begrenzungen der Fläche reflektiert, wobei die reflektierten Schallwellen miteinander sowie mit den eingekoppelten Schallwellen interferieren können. Die so erzeugten Schallwellen können dann erfasst und Messsignale aus den erfassten Schallwellen generiert werden. Die Erfindung geht nun von dem Grundgedanken aus, dass sich die erzeugten Schallwellen abhängig davon ändern, ob sich Objekte auf der Fläche befinden. Dadurch kann anhand der Messsignale wenigstens eine Anwesenheit eines Objekts, beispielsweise einer Person, auf der Fläche bestimmt werden.

Die erfindungsgemäße Vorrichtung weist dazu wenigstens eine Schallquelle auf, die dazu eingerichtet ist, Schallwellen in eine aus wenigstens einem Festkörpermaterial gebildeten Fläche einzukoppeln. Wenigstens ein Schallaufnehmer ist dazu ausgebildet, in der Fläche erzeugte Schallwellen zu erfassen und Messsignale aus den erfassten Schallwellen zu generieren. Eine Steuer- und Auswerteeinrichtung ist dazu eingerichtet die Schallquelle und/oder den Schallaufnehmer anzusteuern, die Messsignale des Schallaufnehmers zu empfangen und anhand der Messsignale eine Anwesenheit eines Objekts auf der Fläche des Überwachungsbereichs zu erfassen. Die Funktionen von Schallaufnehmer und Schallquelle können auch in einem so genannten Schallwandler kombiniert sein.

In einer weiteren Ausführungsform kann die Steuer- und Auswerteeinrichtung dazu eingerichtet sein, alternativ oder zusätzlich eine Laufzeit und/oder eine Phasenverschiebung zwischen Einkoppeln und Erfassen einer Schallwelle zu bestimmen, und aus der Laufzeit und/oder der Phasenverschiebung eine Anwesenheit eines Objekts auf der Fläche des Überwachungsbereichs zu ermitteln.

In einer weiteren Ausführungsform kann die Vorrichtung wenigstens einen ersten und einen zweiten Schallaufnehmer zur Erfassung der in der Fläche erzeugten Schallwellen aufweisen, wobei die Steuer- und Auswerteeinrichtung dazu eingerichtet sein kann, eine erste Laufzeit und/oder Phasenverschiebung zwischen Einkoppeln und Erfassen einer Schallwelle durch den ersten Schallaufnehmer und eine zweite Laufzeit und/oder Phasenverschiebung zwischen Einkoppeln und Erfassen der Schallwelle durch den zweiten Schallaufnehmer zu bestimmen. Die Steuer- und Auswerteeinrichtung kann weiterhin dazu eingerichtet sein, aus Positionsinformationen der Schallquelle und der Schallaufnehmer sowie den Laufzeiten und/oder Phasenverschiebungen eine Anwesenheit und/oder eine Position eines Objekts auf der Fläche des Überwachungsbereichs zu ermitteln. In einer alternativen Variante dieser Ausführungsform kann die Vorrichtung einen Schallaufnehmer sowie wenigstens eine erste und eine zweite Schallquelle zum Einkoppeln von Schallwellen in die Fläche aufweisen, wobei die Schallquellen alternierend aktiviert werden. Die Steuer- und Auswerteeinrichtung kann dann dazu eingerichtet sein, eine erste Laufzeit und/oder Phasenverschiebung zwischen Einkoppeln einer ersten Schallwelle durch die erste Schallquelle und Erfassen der ersten Schallwelle durch den Schallaufnehmer sowie eine zweite Laufzeit und/oder Phasenverschiebung zwischen Einkoppeln einer zweiten Schallwelle durch die zweite Schallquelle und Erfassen der zweiten Schallwelle durch den Schallaufnehmer zu bestimmen. Die Steuer- und Auswerteeinrichtung kann weiterhin dazu eingerichtet sein, aus Positionsinformationen der Schallquellen und des Schallaufnehmers sowie den Laufzeiten und/oder Phasenverschiebungen eine Anwesenheit und/oder eine Position eines Objekts auf der Fläche des Überwachungsbereichs zu ermitteln.

In einer weiteren Ausführungsform kann die Vorrichtung wenigstens drei Schallaufnehmer zur Erfassung der in der Fläche erzeugten Schallwellen aufweisen, wobei die Steuer- und Auswerteeinrichtung dazu eingerichtet sein kann, Zeitdifferenzen zu bestimmen, mit denen die Schallaufnehmer von einem Objekt reflektierte Schallwellen erfassen. Die Steuer- und Auswerteeinrichtung kann weiterhin dazu eingerichtet sein, aus Positionsinformationen der Schallaufnehmer sowie den Zeitdifferenzen eine Anwesenheit und/oder eine Position eines Objekts auf der Fläche des Überwachungsbereichs zu ermitteln. In dieser Ausführungsform ist eine Kenntnis der Position der Schallquelle sowie eines Zeitpunktes, an dem die Schallquelle eine Schallwelle in der Fläche erzeugt hat, nicht nötig. In einer Weiterbildung dieser Ausführungsform kann die Vorrichtung auch mehr als drei Schallaufnehmer aufweisen, wodurch sich die Messgenauigkeit erhöht.

In einer Ausführungsform der Erfindung können die Schallquelle und/oder der Schallaufnehmer als so genannte Phased-Arrays ausgeführt sein, wobei die Phased-Array Schallquelle und/oder der Phased-Array Schallaufnehmer eine Vielzahl von einzelnen Schallquellen beziehungsweise Schallaufnehmern aufweisen, welche so angeordnet sind, dass sie durch Interferenz den Schall bündeln und in eine bestimmte Richtung lenken beziehungsweise eine Laufrichtung einer aufgenommenen Schallwelle bestimmen können. Die Funktionsweise derartiger Phased-Arrays ist beispielsweise aus der Ultraschalltechnik bekannt. Insbesondere können die Funktionen von Phased-Array Schallaufnehmer und Phased-Array Schallquelle in einem Phased-Array Schallwandler kombiniert sein.

Bei Verwendung einer Phased-Array Schallquelle kann die Vorrichtung einen Schallaufnehmer aufweisen und die Steuer- und Auswerteeinrichtung dazu eingerichtet sein, die Phased-Array Schallquelle derart anzusteuern, dass die Fläche geometrisch abgetastet wird und unter Kenntnis von Richtung und Laufzeit der Schallwelle eine Anwesenheit und/oder eine Position eines Objekts auf der Fläche des Überwachungsbereichs ermitteln. Zur Verbesserung der Messgenauigkeit und Störungsunempfindlichkeit kann die Vorrichtung bevorzugt eine Vielzahl von Schallaufnehmern aufweisen. In einer alternativen Variante dieser Ausführungsform kann die Vorrichtung einen Phased-Array Schallaufnehmer sowie eine Schallquelle zur Erzeugung von Schallwellen aufweisen.

In allen genannten Ausführungsformen kann die Steuer- und Auswerteeinrichtung dazu eingerichtet sein, in einer Referenzmessung bei einem definierten Zustand der Fläche, beispielsweise bei leerer Fläche oder einer Fläche, auf der ein oder mehrere Objekte an vorgegebenen Positionen angeordnet sind, durch die Schallwandler generierte Messsignale zu empfangen und als Referenzsignale abzuspeichern. Die Steuer- und Auswerteeinrichtung kann dann weiterhin dazu ausgebildet sein, im normalen Betrieb generierte Messsignale mit den Referenzsignalen zu vergleichen und bei einer vorgegebenen Abweichung ein Objekterkennungssignal auszugeben. Zur Durchführung einer Referenzmessung kann die Steuer- und Auswerteeinrichtung dazu eingerichtet sein, die Schallquellen anzusteuern und einen zeitlichen Verlauf der von den Schallaufnehmern erfassten Schallwellen zu registrieren, wobei die Referenzmessung von im normalen Betrieb erfassten Messungen subtrahiert werden kann. Die Verwendung einer Referenzmessung hat den Vorteil, dass eine Objektdetektion auch bei Mehrfachechos möglich ist, da jede Störung beispielsweise durch Möbel oder Wände auf der Fläche zu derartigen Mehrfachechos führen kann, welche in einer Referenzmessung erfasst werden können.

Um während des laufenden Betriebs auf veränderte Umgebungsbedingungen reagieren zu können, kann die Steuer- und Auswerteeinrichtung weiterhin dazu eingerichtet sein, die Referenzmessung zu aktualisieren, beispielsweise durch ein adaptives Filter. Das Filter kann Filterkoeffizienten mit einer zeitlichen Verzögerung immer so anpassen, dass eine Differenz zwischen Referenzsignal und Messsignal gleich Null ist. Damit werden nur noch Veränderungen registriert. Die Steuer- und Auswerteeinrichtung kann alternativ oder zusätzlich dazu eingerichtet sein, die Filterkoeffizienten auszuwerten, da diese alle Informationen über die überwachte Fläche enthalten.

Die Steuer- und Auswerteeinrichtung kann dazu eingerichtet sein, in einer Laufzeitmessung bei einem definierten Zustand der Fläche, beispielsweise bei leerer Fläche oder einer Fläche, auf der ein oder mehrere Objekte an vorgegebenen Positionen angeordnet sind, aus einer Zeitdauer zwischen Einkoppeln von Schallwellen in die Fläche und Erfassen von in der Fläche erzeugten Schallwellen in Verbindung mit Positionsinformationen von Schallquelle und Schallaufnehmer eine Schallgeschwindigkeit in der Fläche zu bestimmen.

Zur Auswertung von Mehrfachechos kann die Steuer- und Auswerteeinrichtung alternativ oder ergänzend dazu eingerichtet sein, eine Überlagerung von Schallwellen durch eine Auswertung einer Signalform der Messsignale zu erfassen. Die Auswertung der Signalform der Messsignale kann beispielsweise unter Anwendung von Methoden der Künstlichen Intelligenz (KI) erfolgen.

Die Steuer- und Auswerteeinrichtung kann dazu eingerichtet sein, einen durch Oberflächenwellen, insbesondere durch Rayleigh-Wellen, generierten Anteil der Messsignale zu ermitteln und auszuwerten. Die Verwendung von Oberflächenwellen ist aufgrund der oben beschriebenen geringeren Dämpfung vorteilhaft. Eine Möglichkeit der Signaltrennung ergibt sich durch die bereits erwähnte unterschiedliche Ausbreitungsgeschwindigkeit der verschiedenen Wellentypen. In einer Weiterbildung dieser Ausführungsform können auch die anderen Wellenformen, insbesondere Longitudinal- und Transversalwellen, mit in die Auswertung einfließen. Die Anregung der anderen Wellenformen kann dabei wie oben beschrieben gezielt durch geeignete Wahl des Einkoppelwinkels erfolgen.

Die Schallquelle kann zur Abgabe von gepulsten Schallwellen ausgebildet sein, wobei Pulslänge, Pulsamplitude und/oder Pulsfrequenz der ausgesendeten Schallwellen einstellbar sein können. Die Steuer- und Auswerteeinrichtung kann dazu eingerichtet sein, insbesondere die Pulslänge derart einzustellen, dass nicht trennbare Überlagerungen von Schallwellen vermieden werden, beispielsweise durch Einstellung von Pulslängen im Bereich von 1ns bis 100μs. Da Reflexe an Störstellen die gleiche Pulslänge wie die ausgesendeten Schallwellen aufweisen, kommt es seltener zu Überlagerungen.

Die Schallquelle kann zur Abgabe von kontinuierlichen Schallwellen ausgebildet sein, wobei Amplitude und Frequenz der ausgesendeten Schallwellen einstellbar sein können. Die Steuer- und Auswerteeinrichtung kann dabei dazu eingerichtet sein, eine Phasenverschiebung zwischen ausgesendeten und erfassten Schallwellen zu bestimmen, und aus der Phasenverschiebung eine Anwesenheit eines Objekts auf der Fläche des Überwachungsbereichs zu ermitteln. Die Schallquelle kann auch als Rauschquelle ausgebildet sein, wobei das Rauschmuster der Auswerteeinrichtung bekannt sein muss.

In einer Ausführungsform kann die Steuer- und Auswerteeinrichtung dazu eingerichtet sein, einen nicht von der Schallquelle generierten Anteil der Messsignale zu ermitteln, beispielsweise einen Anteil des Messsignals, der durch Schritte einer Person oder den Aufprall eines Objekts auf der Fläche generiert wurde. Der nicht von der Schallquelle generierte Anteil des Messsignals kann dabei zur Erhöhung der Messgenauigkeit verwendet werden.

In einer Ausführungsform kann die Steuer- und Auswerteeinrichtung dazu eingerichtet sein, bei Erfassung eines nicht von der Schallquelle generierten Messsignals die Schallquelle zu aktivieren, um Schallwellen in der Fläche zu erzeugen

Die erfindungsgemäße Vorrichtung kann auch mit weiteren Sensoren zur Erfassung von Objekten in einem Überwachungsbereich kombiniert werden, beispielsweise mit Kameras, Laserscanner, Radar, oder Ultraschallsensoren, beispielsweise kann die Steuer- und Auswerteeinrichtung dazu eingerichtet sein, bei Erfassung eines Objekts einen weiteren Sensor zu aktivieren.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1    eine schematische Darstellung einer erfindungsgemäßen Vorrichtung mit einer Schallquelle und einem Schallaufnehmer

Fig. 2    eine schematische Darstellung einer erfindungsgemäßen Vorrichtung mit einer Schallquelle und zwei Schallaufnehmern

Fig. 3    eine schematische Darstellung einer erfindungsgemäßen Vorrichtung mit einer Schallquelle und drei Schallaufnehmern

Fig. 4    eine schematische Darstellung einer erfindungsgemäßen Vorrichtung mit einer Schallquelle und vier Schallaufnehmern

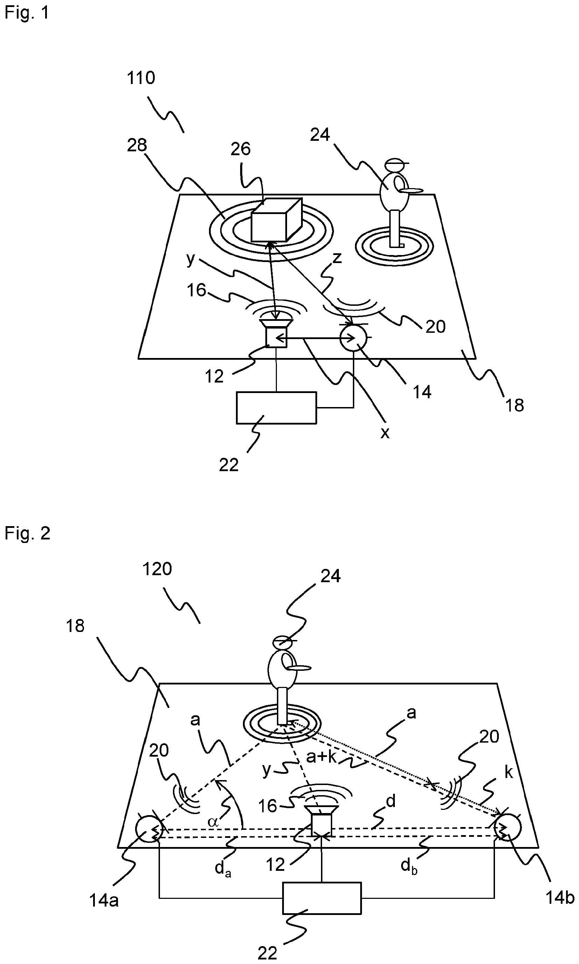

Figur 1 zeigt eine schematische Darstellung einer erfindungsgemäßen Vorrichtung 110 mit einer Schallquelle 12 und einem Schallaufnehmer 14. Die Schallquelle 12 koppelt Schallwellen 16 in eine aus wenigstens einem Festkörper bestehende Fläche 18 ein. Die eingekoppelten Schallwellen 16 breiten sich in der Fläche 18 aus und werden an Begrenzungen der Fläche 18 sowie an auf der Fläche befindlichen Objekten 24, 26 reflektiert, wobei die reflektierten Schallwellen miteinander sowie mit den eingekoppelten Schallwellen 16 interferieren können. Die so in der Fläche 18 erzeugten Schallwellen 20 werden von dem Schallaufnehmer 14 erfasst, der aus den erfassten Schallwellen Messignale generiert. Die Steuer- und Auswerteeinheit 22 ist dazu eingerichtet, die Schallquelle 12 und den Schallaufnehmer 14 anzusteuern und die Messsignale des Schallaufnehmers 14 zu empfangen.

Die Steuer- und Auswerteeinheit 22 kann in einer Referenzmessung bei einem definierten Zustand der Fläche 18, beispielsweise einer leeren Fläche oder einer Fläche, auf der ein oder mehrere Objekte, beispielsweise ein Kiste 26, an vorgegebenen Positionen angeordnet sind, die Schallquelle 12 ansteuern und Referenzsignale vom Schallaufnehmer 14 empfangen und abspeichern.

In darauffolgenden Messungen kann die Steuer- und Auswerteeinheit 22 die gespeicherten Referenzsignale mit empfangenen Messsignalen vergleichen. Befindet sich nun ein weiteres Objekt, beispielsweise eine Person 24 auf der Fläche 18, reflektiert auch diese die eingekoppelten Schallwellen 16. Die erzeugten Schallwellen 20 ändern sich also abhängig davon, ob sich im Vergleich zur Referenzmessung weitere Objekte auf Fläche 18 befinden. Folglich ändern sich auch die von der Steuer- und Auswerteeinheit 22 empfangenen Messsignale, so dass durch Vergleich der Referenzsignale mit den empfangenen Messsignalen eine Anwesenheit eines weiteren Objekts, beispielsweise einer Person 24, auf der Fläche 18 bestimmt werden kann.

Im Rahmen einer Referenzmessung kann die Steuer- und Auswerteeinheit 22 durch eine Laufzeitmessung bei einem definierten Zustand der Fläche 18 eine Schallgeschwindigkeit c in der Fläche 18 bestimmen. Beispielsweise kann die Steuer- und Auswerteeinheit 22 eine erste Zeitdauer T1 zwischen Einkoppeln von Schallwellen durch die Schallquelle 12 und direktem Erfassen von in der Fläche erzeugten Schallwellen 16 durch den Schallaufnehmer 14 bestimmen und mit Hilfe des Abstands x zwischen Schallquelle 12 und Schallaufnehmer 14 gemäß $c = \dfrac{x}{T1}$ die Schallgeschwindigkeit c in der Fläche berechnen. Befindet sich beispielsweise ein Objekt 26 in definierter erster Entfernung y von der Schallquelle 12 und zweiter Entfernung z vom Schallaufnehmer 14 kann die Steuer- und Auswerteeinheit 22 eine zweite Zeitdauer T2 zwischen Einkoppeln von Schallwellen 16 durch die Schallquelle 12 und Erfassen der von dem Objekt 26 reflektierten Schallwellen 28 durch den Schallaufnehmer 14 bestimmen und mit Hilfe der Entfernungen y, z der Schallquelle 12 und des Schallaufnehmers 14 vom Objekt 26 gemäß $c = \dfrac{y+z}{T2}$ die Schallgeschwindigkeit c in der Fläche berechnen.

Figur 2 zeigt eine schematische Darstellung einer erfindungsgemäßen Vorrichtung 120 mit einer Schallquelle 12, einem ersten Schallaufnehmer 14a und einem zweiten Schallaufnehmer 14b, die in einem Abstand d zueinander und jeweils in einem Abstand $d_a$, $d_b$ zur Schallquelle 12 angeordnet sind. Eine Steuer- und Auswerteeinheit 22 ist dazu eingerichtet, die Schallquelle 12 und die Schallaufnehmer 14a, 14b anzusteuern und Messsignale der Schallaufnehmer 14a, 14b zu empfangen.

Die Steuer- und Auswerteeinheit 22 ist weiterhin dazu eingerichtet eine erste Laufzeit $T_a$ zwischen Einkoppeln und Erfassen einer Schallwelle 20a durch den ersten Schallaufnehmer 14a, eine zweite Laufzeit $T_b$ zwischen Einkoppeln und Erfassen einer Schallwelle 20b durch den zweiten Schallaufnehmer 14b zu bestimmen sowie aus Positionsinformationen d, $d_a$, $d_b$ der Schallquelle 12 und der Schallaufnehmer 14a, 14b sowie den Laufzeiten $T_a$, $T_b$ eine Anwesenheit und/oder eine Position eines Objekts, beispielsweise einer Person 24 auf der Fläche 18 zu ermitteln. Die Position des Objekts lässt sich bei bekannter Schallgeschwindigkeit c in der Fläche beispielsweise mit trigonometrischen Verfahren ermitteln.

Die Schallaufnehmer 14a, 14b sind in einer Distanz d angeordnet. Die Person 24 reflektiert die eingekoppelten Schallwellen 16, wobei der zweite Schallaufnehmer 14b die in der Fläche 18 erzeugte Schallwelle 20 im Vergleich zum ersten Schallaufnehmer 14a verzögert erfasst. Die Verzögerung lässt sich über die Schallgeschwindigkeit c in der Fläche 18 direkt in eine Abstandsdifferenz k umrechnen: $k = (T_b - T_a)\cdot c$. Die Person 24 befindet sich also in einem ersten Abstand a vom ersten Schallaufnehmer 14a und in einem zweiten Abstand a+k vom zweiten Schallaufnehmer 14b sowie in einem dritten Abstand y von der Schallquelle 12. Mit dem Kosinussatz ergibt sich der Winkel $\alpha$ am ersten Schallaufnehmer 14a in dem durch die Person 24, und den ersten und zweiten Schallwandler 14a, 14b gebildeten Dreieck wie folgt:

$$\cos(\alpha) = -\frac{2 \cdot a \cdot k + k^2 - d^2}{2 \cdot a \cdot d}$$

Beziehungsweise in dem durch die Person 24, dem ersten Schallwandler 14a und der Schallquelle 12 gebildeten Dreieck:

$$\cos(\alpha) = -\frac{y^2 - a^2 - d_a{}^2}{2 \cdot a \cdot d_a}$$

Der Winkel $\alpha$ hängt von a und k beziehungsweise y ab, wobei sich k wie oben beschrieben direkt aus der Verzögerung $T_b$-$T_a$ ergibt, mit der der zweite Schallaufnehmer 14b die in der Fläche 18 erzeugte Schallwelle 20 im Vergleich zum ersten Schallaufnehmer 14a erfasst. Unter Verwendung der Laufzeiten $T_a$, $T_b$ zwischen Einkoppeln der Schallwellen 16 und Empfangen der erzeugten Schallwellen 20 ergibt sich $a + y = T_a{\cdot}c$ sowie $a + y + k = T_b{\cdot}c$, wobei c jeweils die Schallgeschwindigkeit in der Fläche 18 ist. Unter Verwendung der oben aus dem Kosinussatz abgeleiteten Formeln (Gleichsetzen) lassen sich damit y und a bestimmen, da d, $d_a$, $T_a$ und $T_b$ bekannt sind.

Somit lässt sich mit der in Figur 2 beschriebenen Vorrichtung nicht nur eine Anwesenheit, sondern auch eine Position eines Objekts 24 bestimmen.

In einer alternativen, nicht gezeigten Variante der in Figur 2 beschriebenen Ausführungsform kann die Vorrichtung auch einen Schallaufnehmer sowie eine erste und eine zweite Schallquelle zum Einkoppeln von Schallwellen in die Fläche aufweisen, wobei die Schallquellen alternierend aktiviert werden oder Schallwellen mit unterschiedlichen Sendemustern aussenden. Die Steuer- und Auswerteeinrichtung ist dann dazu eingerichtet, eine erste Laufzeit zwischen Einkoppeln einer ersten Schallwelle durch die erste Schallquelle und Erfassen der ersten Schallwelle durch den Schallaufnehmer sowie eine zweite Laufzeit zwischen Einkoppeln einer zweiten Schallwelle durch die zweite Schallquelle und Erfassen der zweiten Schallwelle durch den Schallaufnehmer zu bestimmen. Entsprechend dem in Figur 2 gezeigten Beispiel kann aus den Laufzeitunterschieden und den Positionsinformationen der Schallquellen und des Schallaufnehmers die Position des Objekts auf der Fläche bestimmt werden.

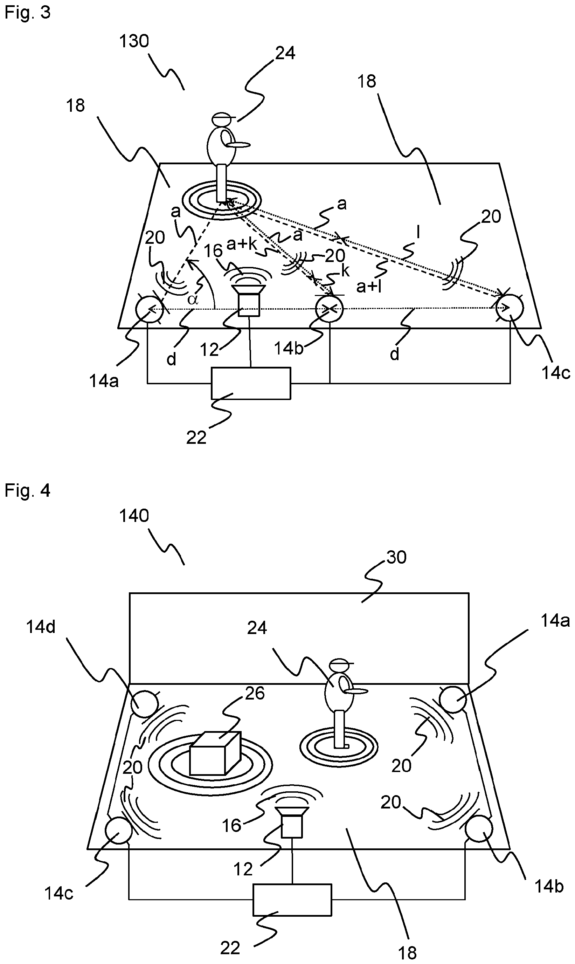

Figur 3 zeigt eine schematische Darstellung einer erfindungsgemäßen Vorrichtung 130 mit einer Schallquelle 12, einem ersten Schallaufnehmer 14a, einem zweiten Schallaufnehmer 14b, und einem dritten Schallaufnehmer 14c die jeweils in einem Abstand d zueinander angeordnet sind. Die Abstände zwischen den Schallaufnehmern 14a, 14b, 14c können grundsätzlich verschieden sein, gleiche Abstände vereinfachen die folgende, beispielhafte Positionsbestimmung. Die Steuer- und Auswerteeinheit 22 ist dazu eingerichtet, die Schallquelle 12 und die Schallaufnehmer 14a, 14b, 14c anzusteuern und Messsignale der Schallaufnehmer 14a, 14b zu empfangen. Die Person 24 reflektiert die eingekoppelten Schallwellen 16, wobei der zweite Schallaufnehmer 14b und der dritte Schallaufnehmer 14c die in der Fläche 18 erzeugte Schallwelle 20 im Vergleich zum ersten Schallaufnehmer 14a jeweils verzögert erfassen. Die Verzögerung lässt sich über die Schallgeschwindigkeit c in der Fläche 18 direkt in eine Abstandsdifferenz k beziehungsweise I umrechnen.

Analog zum in Figur 2 beschriebenen Ausführungsbeispiel ergibt sich der Winkel $\alpha$ am ersten Schallaufnehmer 14a in dem durch die Person 24, und den ersten und dritten Schallwandler 14a, 14c gebildeten Dreieck wie folgt:

$$\cos(\alpha) = -\frac{2 \cdot a \cdot l + l^2 - 4 \cdot d^2}{4 \cdot a \cdot d}$$

Durch Gleichsetzen lässt sich dann der Abstand a der Person zum ersten Schallaufnehmer 14a bestimmen:

$$-\frac{2 \cdot a \cdot k + k^2 - d^2}{2 \cdot a \cdot d} = -\frac{2 \cdot a \cdot l + l^2 - 4 \cdot d^2}{4 \cdot a \cdot d}$$

$$a = \frac{l^2 - 2 \cdot k^2 - 2 \cdot d^2}{4 \cdot k - 2 \cdot l}$$

Im Unterschied zum Ausführungsbeispiel aus Figur 2 ist bei der Verwendung von drei Schallaufnehmern eine Kenntnis der absoluten Laufzeit der Schallwellen nicht zwingend nötig, lediglich die Laufzeitunterschiede, die sich aus den unterschiedlichen Zeitpunkten ergeben, an denen die erzeugte Schallwelle 20 an den Schallaufnehmern 14a, 14b, 14c erfasst wird. Es können auch mehr als 3 Schallaufnehmern verwendet werden, wobei das Gleichungssystem überbestimmt wäre. Die zusätzlichen Informationen können dann zur Erhöhung der Messgenauigkeit verwendet werden. Bei Verwendung von 3 oder mehr Schallaufnehmern können auch Positionen von externen Schallquellen bestimmt werden, beispielsweise das Auftreten eines Fußes.

Figur 4 zeigt eine schematische Darstellung einer erfindungsgemäßen Vorrichtung 140 mit einer Schallquelle 12 und vier Schallaufnehmer 14a-d, die jeweils in den Ecken der zu überwachenden Fläche 18 angeordnet und mit einer Steuer- und Auswerteeinheit 22 verbunden sind. Die Steuer- und Auswerteeinheit 22 ist dazu eingerichtet, die Schallquelle 12 und die Schallaufnehmer 14a-d anzusteuern und Messsignale der Schallaufnehmer 14a-d zu empfangen. Wie in den vorhergehenden Ausführungsbeispielen beschrieben, koppelt die Schallquelle 12 Schallwellen 16 in eine aus wenigstens einem Festkörper bestehende Fläche 18 ein. Die eingekoppelten Schallwellen 16 breiten sich in der Fläche 18 aus und werden an Begrenzungen der Fläche 18 beispielsweise einer Wand 30 sowie an auf der Fläche befindlichen Objekten 24, 26 reflektiert, wobei die reflektierten Schallwellen miteinander sowie mit den eingekoppelten Schallwellen 16 interferieren können. Die so in der Fläche 18 erzeugten Schallwellen 20 werden von den Schallaufnehmern 14a-d erfasst, die aus den erfassten Schallwellen 20 Messignale generieren. Die Steuer- und Auswerteeinheit 22 ist dazu eingerichtet, die Schallquelle 12 und den Schallaufnehmer 14 anzusteuern und die Messignale der Schallaufnehmer 14a-d zu empfangen.

Die Steuer- und Auswerteeinheit 22 kann in einer Referenzmessung bei einem definierten Zustand der Fläche 18, beispielsweise einer leeren Fläche oder einer Fläche, auf der ein oder mehrere Objekte, beispielsweise einen Kiste 26, an vorgegebenen Positionen angeordnet sind, die Schallquelle 12 ansteuern und Referenzsignale von den Schallaufnehmern 14a-d empfangen und abspeichern.

In darauffolgenden Messungen kann die Steuer- und Auswerteeinheit 22 die gespeicherten Referenzsignale mit empfangenen Messignalen vergleichen. Befindet sich nun ein weiteres Objekt, beispielsweise eine Person 24 auf der Fläche 18, reflektiert auch diese die eingekoppelten Schallwellen 16. Die erzeugten Schallwellen 20 ändern sich also abhängig davon, ob sich im Vergleich zur Referenzmessung weitere Objekte auf Fläche 18 befinden. Folglich ändern sich auch die von der Steuer- und Auswerteeinheit 22 empfangenen Messignale, so dass durch Vergleich der Referenzsignale mit den empfangenen Messignalen eine Anwesenheit eines weiteren Objekts, beispielsweise einer Person 24, auf der Fläche 18 bestimmt werden kann.

Durch die Verwendung mehrerer Schallaufnehmer 14a-d, deren räumliche Beziehung zueinander und zur Schallquelle 12 bekannt ist, lassen sich die die Messignale genauer auswerten. Die von den Schallaufnehmern 14a-d erfassten Schallwellen 20 unterscheiden sich aufgrund von Laufzeitunterschieden je nach räumlicher Position der Schallaufnehmer 14a-d. Die Steuer- und Auswerteeinheit 22 kann, aus den von den Schallaufnehmern 14a-d empfangenen Messignalen mittels deterministischer Methoden, beispielsweise unter Verwendung eines Simplex-Algorithmus oder eines Kalman Filters, die Positionen weiterer Objekte, beispielsweise einer Person bestimmen. Die Positionsbestimmung kann alternativ oder in Ergänzung durch Methoden der Künstlichen Intelligenz erfolgen.

**Patentansprüche**

1. Vorrichtung (110, 120, 130, 140) zum Erfassen von Objekten (24, 26) in einem Überwachungsbereich, der mindestens eine aus wenigstens einem Festkörpermaterial gebildete Fläche (18) aufweist, mit

   - wenigstens einer Schallquelle (12) zum Einkoppeln von Schallwellen (16) in die Fläche (18),
   - wenigstens einem Schallaufnehmer (14) zur Erfassung von in der Fläche erzeugten Schallwellen (20) und zum Generieren von Messignalen aus den erfassten Schallwellen (20), und
   - einer Steuer- und Auswerteeinrichtung (22), die dazu eingerichtet ist die Schallquelle (12) anzusteuern und die Messignale des Schallaufnehmers (14) zu empfangen

   **dadurch gekennzeichnet,**
   **dass** die Steuer- und Auswerteeinrichtung (22) dazu eingerichtet ist, anhand der Messignale eine Anwesenheit eines Objekts (24, 26) auf der Fläche (18) des Überwachungsbereichs zu erfassen.

2. Vorrichtung (110, 120, 130, 140) nach Anspruch 1, **dadurch gekennzeichnet, dass** die Steuer- und Auswerteeinrichtung (22) dazu eingerichtet ist, eine Position des erfassten Objekts (24, 26) auf der Fläche (18) des Überwachungsbereichs zu ermitteln.

3. Vorrichtung (110, 120, 130, 140) nach einem der vorhergehenden Ansprüche, **dadurch gekennzeichnet, dass** die die Steuer- und Auswerteeinrichtung (22) dazu eingerichtet ist, eine Laufzeit und/oder eine Phasenverschiebung zwischen Einkoppeln der Schallwellen (16) und Erfassen der erzeugten Schallwellen (20) zu bestimmen.

4. Vorrichtung (120, 130, 140) nach Anspruch 3, **dadurch gekennzeichnet, dass** die Vorrichtung (120, 130, 140) einen ersten Schallaufnehmer (14a) und einen zweiten Schallaufnehmer (14b) zur Erfassung der in der Fläche erzeugten Schallwellen (20) aufweist, wobei die Steuer- und Auswerteeinrichtung (22) dazu eingerichtet ist, eine erste Laufzeit und/oder Phasenverschiebung zwischen Einkoppeln der Schallwellen (16) und Erfassen der erzeugten Schallwellen (20) durch den ersten Schallaufnehmer (14a) und eine zweite Laufzeit und/oder Phasenverschiebung zwischen Einkoppeln der Schallwellen (16) und Erfassen der erzeugten Schallwellen (20) durch den zweiten Schallaufnehmer (14b) zu bestimmen.

5. Vorrichtung nach Anspruch 3, **dadurch gekennzeichnet, dass** die Vorrichtung eine erste Schallquelle zum Einkoppeln einer ersten Schallwelle in die Fläche und eine zweite Schallquelle zum Einkoppeln einer zweiten Schallwelle in die Fläche aufweist, wobei die Steuer- und Auswerteeinrichtung dazu eingerichtet ist, die Schallquellen alternierend zu aktivieren und eine erste Laufzeit und/oder Phasenverschiebung zwischen Einkoppeln und Erfassen der ersten Schallwelle sowie eine zweite Laufzeit und/oder Phasenverschiebung zwischen Einkoppeln und Erfassen der zweiten Schallwelle zu bestimmen.

6. Vorrichtung (120, 130, 140) nach einem der Ansprüche 3 bis 5, wobei die Steuer- und Auswerteeinrichtung (22) dazu eingerichtet ist, aus Positionsinformationen der Schallquellen (12) und/oder der Schallaufnehmer 14, 14a-d) sowie den bestimmten Laufzeiten und/oder Phasenverschiebungen eine Position des Objekts (24, 26) auf der Fläche des Überwachungsbereichs (18) zu ermitteln.

7. Vorrichtung (130, 140) nach Anspruch 2, **dadurch gekennzeichnet, dass** die Vorrichtung (130, 140) wenigstens drei Schallaufnehmer (14a-c) zur Erfassung der in der Fläche erzeugten Schallwellen aufweist, wobei die Steuer- und Auswerteeinrichtung (22) dazu eingerichtet ist, Zeitdifferenzen, mit denen die Schallaufnehmer (14a-c) von einem Objekt (24, 26) reflektierte Schallwellen erfassen, zu bestimmen und aus Positionsinformationen der Schallaufnehmer (14a-c) sowie den Zeitdifferenzen eine Anwesenheit und/oder die Position des Objekts (24, 26) auf der Fläche (18) des Überwachungsbereichs zu ermitteln.

8. Vorrichtung (110, 120, 130, 140) nach einem der vorhergehenden Ansprüche, **dadurch gekennzeichnet, dass** wenigstens eine Schallquelle (12) und/oder wenigstens ein Schallaufnehmer (14, 14a-d) als Phased-Array ausgebildet ist.

9. Vorrichtung (110, 120, 130, 140) nach einem der vorhergehenden Ansprüche, **dadurch gekennzeichnet, dass** die Steuer- und Auswerteeinrichtung (22) dazu eingerichtet ist, in einer Referenzmessung generierte Messsignale als Referenzsignale abzuspeichern.

10. Vorrichtung (110, 120, 130, 140) nach Anspruch 9, **dadurch gekennzeichnet, dass** die Steuer- und Auswerteeinrichtung (22) dazu eingerichtet ist, die Referenzsignale von Messignalen zu subtrahieren und aus der Differenz eine Anwesenheit und/oder die Position eines Objekts (24, 26) auf der Fläche (18) des Überwachungsbereichs zu ermitteln.

11. Vorrichtung (110, 120, 130, 140) nach Anspruch 9 oder 10, **dadurch gekennzeichnet, dass** die Steuer- und Auswerteeinrichtung (22) dazu eingerichtet ist, die Referenzmessung bei einer Änderung von Umgebungsbedingungen zu aktualisieren.

12. Vorrichtung (110, 120, 130, 140) nach einem der vorhergehenden Ansprüche, **dadurch gekennzeichnet, dass** die Steuer- und Auswerteeinrichtung (22) dazu eingerichtet ist, eine Überlagerung von Schallwellen durch eine Auswertung einer Signalform der Messsignale zu erfassen.

13. Vorrichtung (110, 120, 130, 140) nach einem der vorhergehenden Ansprüche, **dadurch gekennzeichnet, dass** die Steuer- und Auswerteeinrichtung (22) dazu eingerichtet ist, einen durch Oberflächenwellen, insbesondere durch Rayleigh-Wellen, generierten Anteil der Messsignale zu ermitteln und auszuwerten.

14. Vorrichtung (110, 120, 130, 140) nach einem der vorhergehenden Ansprüche, **dadurch gekennzeichnet, dass** die Schallquelle (12) zur Abgabe von gepulsten Schallwellen (16) ausgebildet ist.

15. Verfahren zum Erfassen von Objekten (24, 26) in einem Überwachungsbereich, der mindestens eine aus wenigstens einem Festkörpermaterial gebildete Fläche (18) aufweist, mit den Schritten:

- Einkoppeln von Schallwellen (16) in die Fläche (18),
- Erfassen von in der Fläche (18) erzeugten Schallwellen (20),
- Generieren von Messsignalen aus den erfassten Schallwellen
- Empfangen der Messsignale mit einer Steuer- und Auswerteeinrichtung (22), **gekennzeichnet durch** den Schritt
- Erfassen einer Anwesenheit eines Objekts (24, 26) auf der Fläche (18) des Überwachungsbereichs anhand der empfangenen Messsignale.

Fig. 1

Fig. 2

Fig. 3

Fig. 4

EUROPÄISCHER RECHERCHENBERICHT

Nummer der Anmeldung

EP 22 18 1046

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2004/164970 A1 (BENARD DAVID J [US] ET AL) 26. August 2004 (2004-08-26) | 1-6, 12-15 | INV. G01S5/18 |
| A | * Absätze [0009] - [0012], [0023] - [0075] * <br> * Abbildungen 1-9 * | 7-11 | G01S15/04 <br> G01S15/46 <br> G06F3/043 |
| X | DE 10 2019 134307 A1 (VALEO SCHALTER & SENSOREN GMBH [DE]) 17. Juni 2021 (2021-06-17) * Absätze [0001] - [0060], [0063] - [0097] * * Abbildungen 1-4 * | 1,9-12, 14,15 | |
| X | US 2010/026667 A1 (BERNSTEIN JEFFREY TRAER [US]) 4. Februar 2010 (2010-02-04) | 1-4,6-8, 15 | |
| A | * Absätze [0004], [0016] - [0029] * * Abbildungen 1-7 * | 5,9-14 | |

RECHERCHIERTE SACHGEBIETE (IPC)

G01S
G06F

Der vorliegende Recherchenbericht wurde für alle Patentansprüche erstellt

| Recherchenort | Abschlußdatum der Recherche | Prüfer |
|---|---|---|
| München | 17. November 2022 | Kruck, Peter |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 18 1046

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-11-2022

| Im Recherchenbericht angeführtes Patentdokument | Datum der Veröffentlichung | Mitglied(er) der Patentfamilie | Datum der Veröffentlichung |
|---|---|---|---|
| US 2004164970 A1 | 26-08-2004 | US 6741237 B1<br>US 2004164970 A1 | 25-05-2004<br>26-08-2004 |
| DE 102019134307 A1 | 17-06-2021 | CN 114945840 A<br>DE 102019134307 A1<br>EP 4073545 A1<br>WO 2021115875 A1 | 26-08-2022<br>17-06-2021<br>19-10-2022<br>17-06-2021 |
| US 2010026667 A1 | 04-02-2010 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2007069021 A1
- US 10154802 B2
- US 10810481 B2